# EUROPEAN PATENT APPLICATION

(11) **EP 4 206 449 A1**
(43) Date of publication of application: **05.07.2023**
(21) Application number: 22214301.8
(22) Date of filing: 16.12.2022
(51) Int. Cl.: F02C 7/047, F02C 7/14

(54) **SYSTEM AND METHOD TO INCREASE THE TEMPERATURE OF OIL USED TO ANTI-ICE A GAS TURBINE PROPULSION ENGINE**

(30) Priority: 03.01.2022 US 202217646762
(71) Applicant: Honeywell International Inc., Charlotte, NC 28202 (US)
(72) Inventor: DISCHINGER, Dave G., Charlotte, 28202 (US); SMITH, Jeremy, Charlotte, 28202 (US)
(74) Representative: LKGlobal UK Ltd.

(57) **Abstract**

A system and method of increasing the temperature of oil that is used to anti-ice a gas turbine propulsion engine (100) includes supplying oil from an oil supply system (150) to an anti-ice oil circulation system (148) that is disposed within the front frame (146) of the gas turbine propulsion engine, and selectively injecting compressed air from the gas turbine propulsion engine into the oil supply system.

## Description

### TECHNICAL FIELD

The present invention generally relates to gas turbine propulsion engine anti-cing, and more particularly relates to a system and method for increasing the temperature of oil that is used to anti-ice a front frame of a gas turbine propulsion engine

### BACKGROUND

An aircraft gas turbine propulsion engine may be exposed to numerous and varied environmental conditions. For example, the engine may be exposed to various environmental conditions that may result in ice accretion at various locations on or within the engine. Not surprisingly, such accretion can adversely affect engine performance and/or have various other deleterious effects on engine components. Thus, many aircraft include anti-ice systems to prevent ice accretion on various locations on or within the engine.

Some anti-icing systems use lubricating oil, which is heated during engine operation, to implement the anti-icing function for certain portions of the engine. For example, some engines include an air-oil heat exchanger in the front frame. The relatively hot lubricating oil that circulates through the air-oil heat exchanger is also used to provide anti-icing for the engine inlet. While this arrangement typically provides sufficient ant-icing capabilities, under some unlikely, yet postulated circumstances, the temperature of the lubricating oil may be too cool to provide the needed anti-icing capabilities.

Hence, there is a need for a system and method to increase the temperature of oil that is used to anti-ice a gas turbine propulsion engine, when needed, and that can be implemented at relatively low cost, relatively low weight, and with relatively high reliability. The present invention addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, an engine anti-ice system includes a gas turbine propulsion engine, an oil supply system, and a compressed air injection valve. The gas turbine propulsion engine includes an inlet section, a compressor section, a combustor section, and a turbine section. The inlet section includes a front frame having an anti-ice oil circulation system disposed therein. The oil supply system is in fluid communication with the anti-ice oil circulation system and is configured to supply oil thereto. The oil supply system has a compressed air injection port coupled to selectively receive compressed air from the gas turbine propulsion engine. The compressed air injection valve is coupled to the compressed air injection port and moveable between a closed position, in which the compressed air injection port does not receive the compressed air from the gas turbine engine, and at least one open position, in which the compressed air injection port receives the compressed air from the gas turbine engine.

In another embodiment, a method of increasing the temperature of oil that is used to anti-ice a gas turbine propulsion engine includes supplying oil from an oil supply system to an anti-ice oil circulation system that is disposed within the front frame of the gas turbine propulsion engine, and selectively injecting compressed air from the gas turbine propulsion engine into the oil supply system.

In yet another embodiment, an engine anti-ice system includes a gas turbine propulsion engine, an oil supply system, a fuel-oil heat exchanger, a heat exchanger bypass duct, a heat exchanger bypass valve, and a compressed air injection valve. The gas turbine propulsion engine includes an inlet section, a compressor section, a combustor section, and a turbine section. The inlet section includes a front frame having an anti-ice oil circulation system disposed therein, and the combustion section includes a combustor plenum having a combustor disposed therein. The oil supply system is in fluid communication with the anti-ice oil circulation system and is configured to supply oil thereto. The oil supply system has a compressed air injection port coupled to selectively receive compressed air from the combustor plenum. The fuel-oil heat exchanger disposed within the oil supply system and has an oil flow passage and a fuel flow passage. The oil flow passage includes an oil inlet and an oil outlet and has the oil flowing therein. The fuel flow passage has fuel flowing therein. The fuel-oil heat exchanger is configured to transfer heat from the oil to the fuel. The heat exchanger bypass duct has a bypass duct inlet and a bypass duct outlet. The bypass duct inlet is in fluid communication with the oil inlet and the bypass duct outlet is in fluid communication with the oil outlet. The heat exchanger bypass valve is mounted on the bypass duct and is movable between a closed position, in which the bypass duct inlet is not in fluid communication with the bypass duct outlet, and at least one open position, in which the bypass duct inlet is in fluid communication with the bypass duct outlet. The compressed air injection valve is coupled to the compressed air injection port and is moveable between a closed position, in which the compressed air injection port does not receive the compressed air from the combustor plenum, and at least one open position, in which the compressed air injection port receives the compressed air from the combustor plenum.

Furthermore, other desirable features and characteristics of the engine anti-ice system will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 depicts a simplified cross-sectional view of one embodiment of a gas turbine propulsion engine;
FIGS. 2 and 3 depict different example embodiments of an oil supply system that may be included in the gas turbine propulsion engine of FIG. 1.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

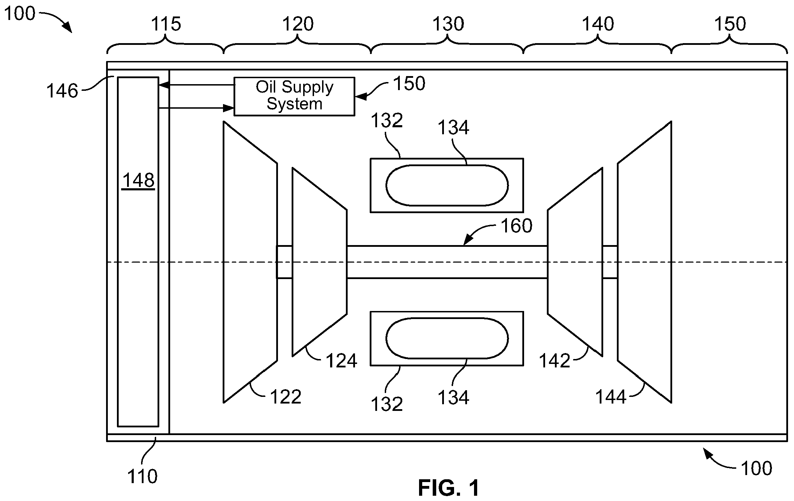

Referring to FIG. 1, a simplified cross-sectional view of one embodiment of a gas turbine propulsion engine 100 is depicted. The engine 100 is disposed in an engine housing 110 and includes an inlet section 115, a compressor section 120, a combustion section 130, a turbine section 140, and an exhaust section 150.

The compressor section 120 and turbine section 140 are operably coupled to a shaft assembly 160 for rotation within the housing 110. A fluid (e.g., air) is drawn into the engine housing 110 through the inlet section 115 and into the compressor section 120. The compressor section 120 may be configured as an axial compressor, a centrifugal compressor, or as an axial-centrifugal compressor. In the depicted embodiment, it is configured as an axial-centrifugal compressor and thus includes an axial compressor 122 and a centrifugal compressor 124. Together, these compressors 122, 124 compress, and thus increase the pressure of, the fluid entering the engine 100 and supply the compressed fluid into the combustion section 130.

The combustion section 130 includes a combustor plenum 132 and a combustor 134. The combustor plenum 132 is in fluid communication with the axial-centrifugal compressor 120, and it directs the compressed fluid into the combustor 134. In the combustor 134, the compressed fluid is mixed with fuel and is combusted. Hot exhaust fluids are then directed into the turbine section 140.

The hot exhaust fluids expand through, and rotate, the turbine section 140 prior to being exhausted through the exhaust section 150. The turbine section 140 rotates to drive equipment in the engine 100 via rotors or spools concentrically disposed about an axis of rotation 170 within the shaft assembly 160. Specifically, the turbine section 140 may include one or more rotors 142, 144 driven by the expanding hot exhaust fluids to rotate the shaft assembly 160 and drive the axial and centrifugal compressors 122, 124.

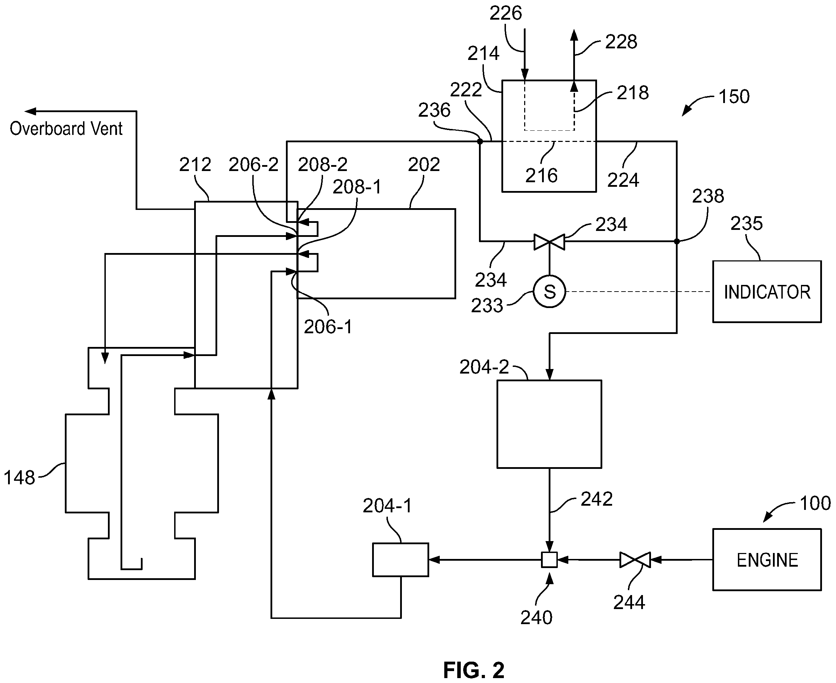

As FIG. 1 also depicts, the inlet section 115 includes a front frame 146. The front frame 146 has an anti-ice oil circulation system 148 disposed therein. The anti-ice oil circulation system 148, as the name implies, receives and circulates oil to provide anti-icing of the front frame 146. The oil is supplied to the anti-ice oil circulation system 148 from an oil supply system 150 that, at least in the depicted embodiment, is disposed within the gas turbine engine 100 and is in fluid communication with the anti-ice oil circulation system 148. Although the configuration of the oil supply system 150 may vary, a functional schematic diagram of at least a portion of one embodiment of the oil supply system 150 is depicted in FIG. 2 and, with reference thereto, will now be described.

The depicted oil supply system 150 includes a lube pump 202 and at least two sumps - a first sump 204 -1 and a second sump 204-2. The lube pump 202 includes at least a first inlet 206-1, a second inlet 206-2, a first outlet 208-1, and a second outlet 208-2. It will be appreciated that the lube pump 202 may be implemented using any one of numerous types of pumps and that it may also include more or less that two inlets and more or less than two outlets.

No matter the number of inlets and outlets, the pump 202, at least in the depicted embodiment, is configured to draw oil from the first sump 204-1 into the first inlet 206-1 and discharge oil out the first outlet 208-1. The oil discharged from the first outlet 208-1 is directed into an accessory gear box 212 and then into the anti-ice oil circulation system 148 in the front frame 146. The pump 202 is also configured to draw oil from the anti-ice oil circulation system 148 into the second inlet 206-2 and discharge oil out the second outlet 208-2. The oil discharged from the second outlet 208-2 is directed into and through a fuel-oil heat exchanger 214.

The fuel-oil heat exchanger 214 includes an oil flow passage 216, which has the oil flowing therein, and a fuel flow passage 218, which has fuel flowing therein, and is configured to transfer heat from the oil to the fuel. More specifically, the oil flow passage 218 includes an oil inlet 222 and an oil outlet 224 and the fuel flow passage has a fuel inlet 226 and a fuel outlet 228. The oil inlet 222 receives the oil discharged from the second outlet 208-2, and the oil outlet 224 is in fluid communication with, and directs oil flow into, the second sump 204-2.

As FIG. 2 also depicts, the oil supply system 150 may additionally include a heat exchanger bypass duct 232 and a heat exchanger bypass valve 234. The heat exchanger bypass duct 232 has a bypass duct inlet 236 that is in fluid communication with the oil inlet 222, and a bypass duct outlet 238 that is in fluid communication with the oil outlet 224. The heat exchanger bypass valve 234 is mounted on the heat exchanger bypass duct 232 and is movable between a closed position, in which the bypass duct inlet 236 is not in fluid communication with the bypass duct outlet 238, and at least one open position, in which the bypass duct inlet 236 is in fluid communication with the bypass duct outlet 238.

The heat exchanger bypass valve 234 is preferably configured to be in an open position, and thus bypass oil around the fuel-oil heat exchanger 214, when the fuel is relatively cold (e.g., < 35°F). This can occur when the ambient temperature around the gas turbine propulsion engine 100 is relatively cold (e.g., < 35°F). This ensures that the temperature of the oil does not get reduced to a level that it is ineffective in implementing its anti-icing functionality.

The oil supply system 150 may additionally include a heat exchanger bypass valve position sensor 233 and a heat exchanger bypass valve position indicator 235. The valve position sensor 233, when included, is coupled to, and is configured to sense the position of, the heat exchanger bypass valve 234. The valve position indicator 235, when included, is in operable communication with the valve position sensor 233 and is configured to indicate the sensed position of the heat exchanger bypass valve 234. The purpose for the heat exchanger bypass valve position sensor 233 and position indicator 235 will be discussed further below.

Whether or not the oil supply system 150 includes the fuel-oil heat exchanger 214 and associated bypass duct 232, valve 234, position sensor 233, and position indicator 235, it does include a compressed air injection port 240. In the depicted embodiment the compressed air injection port 240 is included in an inter-sump conduit 242, through which oil from the second sump 204-2 flows into the first sump 204-1. It will be appreciated, however, that the compressed air injection port 240 could be disposed in any one of numerous other locations in the oil supply system 150, but preferably upstream of the anti-ice oil circulation system 148.

Regardless of its specific location, the compressed air injection port 240 is coupled to selectively receive compressed air from the gas turbine propulsion engine 100. To implement this functionality, a compressed air injection valve 244 is coupled to the compressed air injection port 240 and moveable between a closed position, in which the compressed air injection port 240 does not receive compressed air from the gas turbine engine 100, and at least one open position, in which the compressed air injection port 240 receives compressed air from the gas turbine engine.

It will be appreciated that the compressed air injection valve 244 may be implemented using a passively actuated valve or it may be an actively actuated valve. For example, the compressed air injection valve 244 may be implemented using a temperature actuated valve, a pressure actuated valve, or a temperature-pressure actuated valve. With the temperature actuated valve, the compressed air injection valve 244 is configured to move from the closed position to an open position, and thus allow compressed air from the gas turbine engine 100 to be injected into the compressed air injection port 240, when the oil temperature at or near the compressed air injection port 240 is less than or equal to a first predetermined temperature value and the temperature of the compressed air is greater than or equal to a second predetermined temperature value. The compressed air injection valve 244 is additionally configured to move back to the closed position at least when the oil temperature at or near the compressed air injection port 240 exceeds a third predetermined magnitude that is greater than or equal to the first predetermined temperature value and/or when the temperature of the compressed air is less than or equal to a fourth predetermined temperature value that is less than or equal to the second predetermined temperature value.

With the pressure actuated valve, the compressed air injection valve 244 is configured to move from the closed position to an open position, and thus allow compressed air from the gas turbine engine 100 to be injected into the compressed air injection port 240, when the pressure of the oil at or near the compressed air injection port 240 and the pressure of the compressed air is greater than or equal to a first predetermined differential pressure value. The compressed air injection valve 244 is additionally configured to move back to the closed position at least when the pressure of the oil at or near the compressed air injection port 240 and the pressure of the compressed air is less than or equal to a second predetermined differential pressure value.

With the pressure-temperature actuated valve, the compressed air injection valve 244 is configured to move from the closed position to an open position, and thus allow compressed air from the gas turbine engine 100 to be injected into the compressed air injection port 240, when the oil temperature at or near the compressed air injection port 240 is less than or equal to the first predetermined temperature value and the pressure of the compressed air is greater than or equal to a first predetermined pressure value. The compressed air injection valve 244 is additionally configured to move back to the closed position at least when the oil temperature at or near the compressed air injection port 240 exceeds a second predetermined magnitude that is greater than or equal to the first predetermined temperature value and/or when the pressure of the compressed air is less than or equal to a second predetermined pressure value that is less than or equal to the first predetermined pressure value.

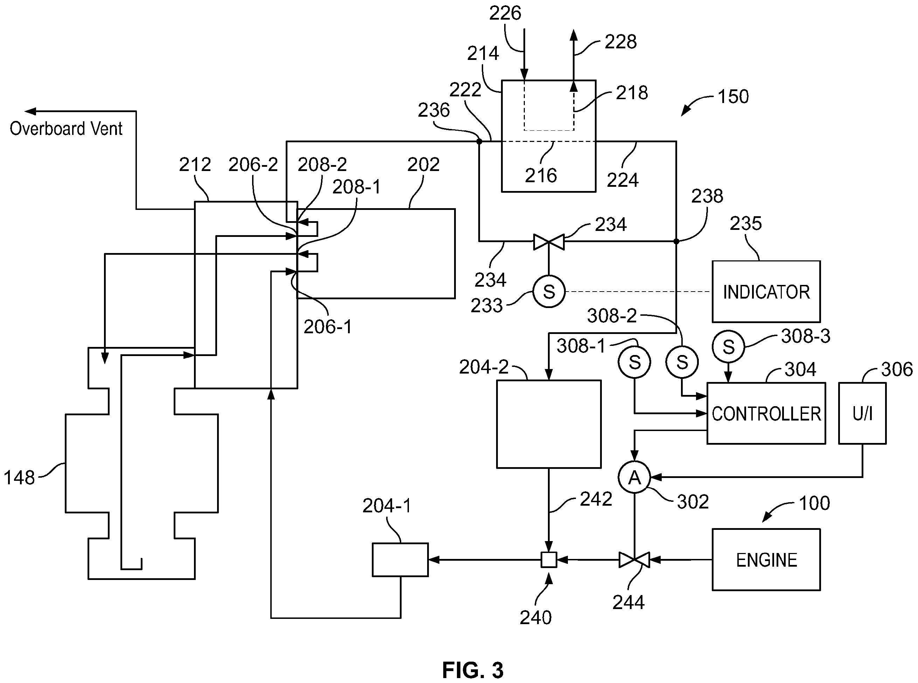

Referring now to FIG. 3, it is seen that when the compressed air injection valve 244 is implemented using an actively actuated valve, the oil supply system 150 additionally includes a valve actuator 302 and either a controller 304 or a user interface 306 (or both). The valve actuator 302 is coupled to the compressed air injection valve 244 and is responsive to valve position commands to move the compressed air injection valve 244 between the closed position and the at least one open position. It will be appreciated that the valve actuator 302 may be implemented using any one of numerous types of actuators including, but not limited to, various types of electrical, hydraulic, pneumatic, electrohydraulic, and electropneumatic types of actuators, just to name a few.

The controller 304, when included, is in operable communication with the valve actuator 302 and is configured to supply the valve position commands to the valve actuator 302. It will be appreciated that the controller 304 may be implemented as a stand-alone, application-specific controller, or its functionality may be implemented in another controller such as, for example, an electronic engine controller (EEC) or a full authority digital engine controller (FADEC), just to name a few.

No matter how the controller 304 is specifically implemented, it is seen that, at least in some embodiments, the oil supply system 150 may also include one or more sensors 308. The sensors 308, when included, are disposed within the gas turbine propulsion engine 100 and are in operable communication with the controller 304. The number and types of sensors may vary depending, for example, on the parameter being used to control the position of the air injection valve 244. In some embodiments, the oil supply system 150 may include only an oil temperature sensor 308-1 that is configured to sense oil temperature in the oil supply system 150 and supply a sensor signal indicative of the sensed oil temperature to the controller 304. In other embodiments, the oil supply system 150 may include two temperature sensors - the oil temperature sensor 308-1 and a compressed air temperature sensor 308-2. The compressed air temperature sensor 308-2 is configured to sense the temperature of the compressed air and supply a sensor signal indicative of the sensed compressed air temperature to the controller 304. In other embodiments, the oil supply system 150 may include the oil temperature sensor 308-1 and a compressed air pressure sensor 308-3. The compressed air pressure sensor 308-3 is configured to sense the pressure of the compressed air and supply a sensor signal indicative of the sensed compressed air pressure to the controller 304. In still other embodiments, the system 150 may include all three sensors - the oil temperature sensor 308-1, compressed air temperature sensor 308-2, and the compressed air pressure sensor 308-3. The temperature sensors 308-1, 308-2, when included, may be implemented using any one of numerous types of temperature sensors, and may be disposed to sense oil temperature and/or compressed air temperature at any one of numerous locations. Preferably, however, the oil temperature sensor 308-1 is disposed upstream of the anti-ice oil circulation system 148. Moreover, pressure sensor 308-3, when included, may be implemented using any one of numerous types of pressure sensors, and may be disposed to sense compressed air pressure at any one of numerous locations. No matter the number and type of sensors 308, the controller 304 is configured to process the sensor signal(s) to generate the valve position commands supplied to the valve actuator 302.

The user interface 306, when included, is preferably disposed remote from the gas turbine propulsion engine 100. For example, it is preferably disposed within the cockpit of the aircraft for which the gas turbine propulsion engine 100 is generating power. The user interface 306, when included, is in operable communication with the valve actuator 302 and is responsive to input from a user (e.g., a pilot) to supply the valve position commands to the valve actuator 302. It will be appreciated that the user interface 306 may be implemented using any one of numerous types of user interface devices. For example, it may be implemented using a simple two-position switch, a rotary dial, or a touchscreen device, just to name a few non-limiting examples.

It will additionally be appreciated that the compressed air supplied to the compressed air injection port 240 may come from various locations in the gas turbine propulsion engine, so long as the temperature of the compressed air is sufficiently high to increase the oil temperature to a sufficient temperature (e.g., at least 100°F, when needed). In some embodiments, for example, the compressed air may be supplied from the compressor section 120. In other embodiments, the compressed air may be supplied from the combustor section 130, and more specifically from the combustor plenum 132.

Regardless of whether the compressed air injection valve 244 is implemented using a passively actuated valve or an actively actuated valve, it will preferably be opened when conditions are such that the oil temperature either is or may be too low to implement its anti-icing function. For example, when the gas turbine propulsion engine 100 is at or below ground idle icing conditions. Alternatively, a user (e.g., pilot) may use the user interface 306 to command the compressed air injection valve 244 to an open position when, for example, the heat exchanger bypass valve position indicator 235 indicates the heat exchanger bypass valve 234 is closed when it should be open.

The system and method described herein increases the temperature of oil that is used to anti-ice a gas turbine propulsion engine, when needed, and does so at a relatively low cost, a relatively low weight, and with relatively high reliability.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "axial" refers to a direction that is generally parallel to or coincident with an axis of rotation, axis of symmetry, or centerline of a component or components. For example, in a cylinder or disc with a centerline and generally circular ends or opposing faces, the "axial" direction may refer to the direction that generally extends in parallel to the centerline between the opposite ends or faces. In certain instances, the term "axial" may be utilized with respect to components that are not cylindrical (or otherwise radially symmetric). For example, the "axial" direction for a rectangular housing containing a rotating shaft may be viewed as a direction that is generally parallel to or coincident with the rotational axis of the shaft. Furthermore, the term "radially" as used herein may refer to a direction or a relationship of components with respect to a line extending outward from a shared centerline, axis, or similar reference, for example in a plane of a cylinder or disc that is perpendicular to the centerline or axis. In certain instances, components may be viewed as "radially" aligned even though one or both of the components may not be cylindrical (or otherwise radially symmetric). Furthermore, the terms "axial" and "radial" (and any derivatives) may encompass directional relationships that are other than precisely aligned with (e.g., oblique to) the true axial and radial dimensions, provided the relationship is predominantly in the respective nominal axial or radial direction. As used herein, the term "substantially" denotes within 5% to account for manufacturing tolerances. Also, as used herein, the term "about" denotes within 5% to account for manufacturing tolerances.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An engine anti-ice system, comprising:
a gas turbine propulsion engine including an inlet section, a compressor section, a combustor section, and a turbine section, the inlet section including a front frame having an anti-ice oil circulation system disposed therein;
an oil supply system in fluid communication with the anti-ice oil circulation system and configured to supply oil thereto, the oil supply system having a compressed air injection port coupled to selectively receive compressed air from the gas turbine propulsion engine; and
a compressed air injection valve coupled to the compressed air injection port and moveable between a closed position, in which the compressed air injection port does not receive the compressed air from the gas turbine engine, and at least one open position, in which the compressed air injection port receives the compressed air from the gas turbine engine.

2. The engine anti-ice system of claim 1, wherein the compressed air is supplied from the compressor section.

3. The engine anti-ice system of claim 1, wherein the compressed air is supplied from the combustor section.

4. The engine anti-ice system of any one of the preceding claims, further comprising:
a valve actuator coupled to the compressed air injection valve, the valve actuator responsive to valve position commands to move the compressed air injection valve between the closed position and the at least one open position.

5. The engine anti-ice system of claim 4, further comprising:
a user interface disposed remote from the gas turbine propulsion engine and in operable communication with the valve actuator, the user interface responsive to input from a user to supply the valve position commands to the valve actuator.

6. The engine anti-ice system of claim 4, further comprising:
a controller in operable communication with the valve actuator and configured to supply the valve position commands to the valve actuator.

7. The engine anti-ice system of claim 6, further comprising:
one or more sensor disposed within the gas turbine engine and in operable communication with the controller, the one or more sensors configured to sense a parameter and a supply sensor signal indicative of the sensed parameter to the controller,
wherein the sensed parameter is one or more of oil temperature, compressed air temperature, and compressed air pressure.

8. The engine anti-ice system of any one of the preceding claims, wherein the compressed air injection valve is one of a temperature actuated valve, a pressure actuated valve, or a temperature-pressure actuated valve.

9. The engine anti-ice system of any one of the preceding claims, further comprising:
fuel-oil heat exchanger disposed within the oil supply system, the fuel-oil heat exchanger having an oil flow passage and a fuel flow passage, the oil flow passage including an oil inlet and an oil outlet and having the oil flowing therein, the fuel flow passage having fuel flowing therein, the fuel-oil heat exchanger configured to transfer heat from the oil to the fuel;
a heat exchanger bypass duct having bypass duct inlet and a bypass duct outlet, the bypass duct inlet in fluid communication with the oil inlet, the bypass duct outlet in fluid communication with the oil outlet; and
a heat exchanger bypass valve mounted on the bypass duct and movable between a closed position, in which the bypass duct inlet is not in fluid communication with the bypass duct outlet, and at least one open position, in which the bypass duct inlet is in fluid communication with the bypass duct outlet.

10. The engine anti-ice system of claim 9, further comprising:
a valve position sensor coupled to, and configured to sense a position of, the heat exchanger bypass valve; and
a valve position indicator in operable communication with the valve position sensor and configured to indicate the sensed position of the heat exchanger bypass valve.

11. A method of increasing temperature of oil that is used to anti-ice a gas turbine propulsion engine, the method comprising the steps of:
supplying oil from an oil supply system to an anti-ice oil circulation system that is disposed within the front frame of the gas turbine propulsion engine; and
selectively injecting compressed air from the gas turbine propulsion engine into the oil supply system.

12. The method of claim 11, wherein:
the oil supply system includes a compressed air injection port; and
the step of selectively injecting the compressed air comprises selectively opening a valve that is coupled to the compressed air injection port.

13. The method of claim 12, wherein:
the gas turbine propulsion engine comprises a compressor section; and
the compressed air is injected into the oil supply system from the compressor section.

14. The method of claim 12, wherein:
the gas turbine propulsion engine comprises a combustor section; and
the compressed air is injected into the oil supply system from the combustor section.

15. The method of claim 14, wherein:
the combustor section includes a combustor plenum having a combustor disposed therein; and
the compressed air is injected into the oil supply system from the combustor plenum.
